# EUROPÄISCHE PATENTSCHRIFT

(11) **EP 2 218 075 B1**
(45) Veröffentlichungstag und Bekanntmachung des Hinweises auf die Patenterteilung: **30.09.2015**
(21) Anmeldenummer: 08859893.3
(22) Anmeldetag: 10.12.2008
(51) Int. Cl.: G01Q 30/02, G01Q 60/06

(54) **VORRICHTUNG UND VERFAHREN FÜR EIN RASTER-KRAFT MIKROSKOP ZUR UNTERSUCHUNG UND MODIFIKATION VON OBERFLÄCHENEIGENSCHAFTEN**
DEVICE AND METHOD FOR AN ATOMIC FORCE MICROSCOPE FOR THE STUDY AND MODIFICATION OF SURFACE PROPERTIES
DISPOSITIF ET PROCÉDÉ POUR UN MICROSCOPE À FORCE ATOMIQUE POUR L'EXAMEN ET LA MODIFICATION DES PROPRIÉTÉS DE SURFACE

(30) Priorität: 11.12.2007 DE 102007060460
(43) Veröffentlichungstag der Anmeldung: 18.08.2010
(73) Patentinhaber: Technische Universität Ilmenau, 98693 Ilmenau (DE); Synchrotron Soleil, 91192 Gif-sur-Yvette Cedex (FR); The Regents of the University of California, Oakland, CA 94607 (US)
(72) Erfinder: KUBSKY, Stefan, F-91940 Les Ulis (FR); OLYNICK, Deirdre, El Cerrito, California 94530 (US); SCHUCK, Peter, Berkeley, California 94705 (US); MEIJER, Jan, 44782 Bochum (DE); RANGELOW, Ivo, W., 34225 Baunatal (DE)
(74) Vertreter: Engel, Christoph Klaus
(86) Internationale Anmeldenummer: PCT/EP2008/067253
(87) Internationale Veröffentlichungsnummer: WO 2009/074617

(56) Entgegenhaltungen:
- DE-A1-102004 031 250
- PERSAUD A ET AL: "Micromachined piezoresistive proximal probe with integrated bimorph actuator for aligned single ion implantation" JOURNAL OF VACUUM SCIENCE AND TECHNOLOGY: PART B, AVS / AIP, MELVILLE, NEW YORK, NY, US, Bd. 24, Nr. 6, 4. Dezember 2006 (2006-12-04), Seiten 3148-3151, XP012091812 ISSN: 1071-1023
- GRABIEC P ET AL: "SNOM/AFM microprobe integrated with piezoresistive cantilever beam for multifunctional surface analysis" MICROELECTRONIC ENGINEERING, ELSEVIER PUBLISHERS BV., AMSTERDAM, NL, Bd. 61-62, 1. Juli 2002 (2002-07-01), Seiten 981-986, XP004360641 ISSN: 0167-9317
- RANGELOW I W: "Piezoresistive Scanning Proximity Probes for Nanoscience" TECHNISCHES MESSEN TM, R.OLDENBOURG VERLAG. MUNCHEN, DE, Bd. 72, Nr. 2, 1. Januar 2005 (2005-01-01), Seiten 103-110, XP008096105 ISSN: 0171-8096 in der Anmeldung erwähnt
- FARAHANI J N ET AL: "Single quantum dot coupled to a scanning optical antenna: a tunable superemitter" PHYSICAL REVIEW LETTERS APS USA, Bd. 95, Nr. 1, 1. Juli 2005 (2005-07-01), Seiten 017402/1-4, XP002521220 ISSN: 0031-9007 in der Anmeldung erwähnt

## Beschreibung

Die Erfindung betrifft eine Vorrichtung und ein Verfahren zur Untersuchung und Modifikation von oberflächennahen und Oberflächeneigenschaften verschiedenartiger Materialien. Vorrichtung und Verfahren kommen an einem Raster-Kraft Mikroskop (AFM) zum Einsatz. Die Vorrichtung umfasst mindestens einen Biegebalken (Cantilever), mindestens einen integrierten piezoresistiven Sensor, mindestens einen integrierten Bimetall-Aktuator (sog. Bimorph-Aktuator) und mindestens eine Messspitze.

Die AFM-Methode ist eine in Industrie und Forschung weit verbreitete Methode, eine Oberfläche mit Hilfe einer sehr scharfen Messspitze abzutasten. Die Messspitze befindet sich am freien Ende eines mikromechanischen Biegebalkens (Cantilever) und reagiert auf kurzreichweitige (Van-der-Waals) Kräfte. Die AFM-Methode wird in den Gebieten Oberflächenphysik, Molekularbiologie, Pharmakologie, den Materialwissenschaften und der Nanotechnologie häufig eingesetzt. Weiterhin werden AFMs in der Industrie einerseits zur Prozesskontrolle verwendet, aber auch zunehmend zur Untersuchung neuartiger Phänomene, die bei der Herstellung und Nutzung hochintegrierter Schaltkreise aufgrund der fortschreitenden Miniaturisierung eine immer wichtigere Rolle spielen. Hierzu zählen plasmonische Resonanzen und das Streuverhalten der an Oberflächen gebundenen Polaritonen. Diese sind ein Schlüsselelement für Hochfrequenzschaltkreise in Nanometermaßstab.

Eine weitere auf AFM basierende Methode - die optische Nahfeldmikroskopie (SNOM - scanning near field optical microscopy) - verwendet Licht, welches durch eine lichtdurchlässige Öffnung in der Messspitze auf die zu untersuchende Oberfläche geleitet wird und durch ein Interferometer oder einen Photodetektor in geringem Abstand hinter der transparenten Probe analysiert wird. Diese Methode verwendet - prinzipbedingt - ausschließlich Licht, welches durch geeignete Medien (z.B. Glasfasern) transportiert werden kann.

Zu den bekannten Verfahren der Raster-Kraft-Mikroskopie zählen im Wesentlichen:
- das Kontakt-Verfahren (contact mode), bei dem die Messspitze in Kontakt mit der Oberfläche steht und bei konstanter Aufliegekraft über diese bewegt wird;
- das kontaktlose Verfahren, bei welchem der Biegebalken in Schwingungen versetzt wird, und die Amplitude und Phase dieser Schwingungen gemessen und geregelt werden, so dass eine kontaktlose Interaktion mit der Oberfläche stattfindet. Dieses Verfahren liefert topologische Informationen.
- das Scherkraft-Verfahren (shear-force), bei welchem Schwingungen der Messspitze parallel zur Oberfläche gemessen werden.

Die beiden letztgenannten AFM-Verfahren bieten den Vorteil, dass zur Abtastung keine unelastische, elektronische Wechselwirkung mit der Oberfläche notwendig ist, und daher auch biologische und nicht- oder halbleitende Oberflächen vermessen werden können. Daneben werden zur Untersuchung von biologischen Proben häufig auch die bekannten Methoden der optischen Nahfeldmikroskopie (SNOM-scanning near field optical microscopy) verwendet. Sie bieten aber aufgrund der Kopplung von AFM-Prinzip und optischer Detektion nur beschränkte Möglichkeiten der chemischen und elektronischen Identifizierung der Oberfläche. Meist werden in der Molekularbiologie spezielle Markieratome oder -moleküle eingesetzt, die eine Fluoreszenz im zugänglichen Wellenlängenbereich aufweisen. Dieser verwendbare Wellenlängenbereich ist jedoch - prinzipbedingt - stark eingeschränkt.

In der Grundlagenforschung ist ein optisches Verfahren demonstriert worden, welches eine passive, metallische Struktur einsetzt, um plasmonische Resonanzen anzuregen [Publikation von J. N. Farahani, D. W. Pohl, H.-J. Eisler und B. Hecht in Physical Review Letters 95, 017402 (2005)]. Das Licht wird hierbei mittels konventioneller Optik von der dem Cantilever abgewandten Seite zur Probe geführt und analysiert. Der Cantilever dient durch seine Form als passive Antenne, die auf die untersuchten Strukturen abgestimmt ist.

Die Fokussierung von Synchrotron- oder Laserstrahlung auf extrem kleine (einige nm Durchmesser), kontrollierbare Bereiche einer zu untersuchenden Probe ist bisher aufgrund fehlender geeigneter Optiken nicht möglich. Durch die extrem hohe Intensität und Parallelität kann man mit Synchrotronlicht erfindungsgemäß solch kleine Dimensionen durch Kollimation dennoch erreichen.

Aus der DE 103 07 561 A1 ist eine Messanordnung zur kombinierten Abtastung und Untersuchung von mikrotechnischen, elektrische Kontakte aufweisenden Bauelementen bekannt, die sich für alle drei oben beschriebene Verfahren besonders eignet. Dabei kann auf die sonst übliche Laseroptik zum Auslesen der Verbiegung bzw. der Schwingungsamplitude und -phase vollständig verzichtet werden. Ein in den Cantilever integrierter Heizdraht (thermal bimorph actuator) und ein ebenfalls integriertes, piezoresistives Widerstandsnetzwerk übernehmen diese Aufgabe. Diese Methode und derartige Raster-Kraft-Sonden (piezoresitive Cantilever) mit integriertem Bimorph-Aktuator und unterschiedlich funktionalisierten Messspitzen werden in I.W. Rangelow: "Piezoresistive Scanning Proximity Probes for Nanoscience", Technisches Messen 72 (2005) 2, Seite 103 - 110] beschrieben.

Die DE 10 2004 031250 A1 beschreibt eine Vorrichtung zur lagegenauen Platzierung und Manipulation von nanoskopischen Objekten, die es ermöglicht, Atome unter den ersten atomaren Schichten der Oberfläche hochgenau zu platzieren. Dazu wird eine durchbohrte AFM-Spitze verwendet, die als Blende zur Kollimation eines niederenergetischen Ionenstrahls dient und die mit zusätzlichen Elektroden versehen ist, die eine elektrostatische Linse bilden, um die einfallenden Ionenstrahlen auf das Target zu fokussieren. Die AFM-Spitze ist auf einem Cantilever angeordnet, der auf einem Träger befestigt ist und beispielsweise durch ein piezoelektrisches Sensor-/Aktor-System hochgenau positioniert werden kann.

Der Fachartikel von Persaud, A. et al: "Micromachined piezoresistive proximal probe with integrated bimorph actuator for aligned single ion implantation", Journal of Vacuum Science and Technology: Part B, AVS/AIP, Melville, New York, NY, US, Bd. 24, Nr. 6, 4.12.2006, S. 3148-3151 beschreibt zur Platzierung einzelner Ionen in einer Atomstruktur einen piezoresistiven Sensor, der als Cantilever mit einer pyramidenförmigen Spitze und mit einem integrierten Bimorph-Aktuator und einem Loch in der Spitze ausgeführt ist.

Aus Grabiec. P et al: "SNOM/AFM microprobe integrated with piezoresistive cantilever beam for multifunctional surface analysis", Microelectronic Engineering, Elsevier Publishers BV., Amsterdam, NL, Bd. 61-62, 1.7.2002, S. 981-986, ist eine Microsonde für die optische Nahfeldmikroskopie (SNOM) bekannt. Eine AFM-Sonde ist als Cantilever mit einer hohlen Spitze als Linse für Laserlicht und einem integrierten piezoresistiven Sensor ausgeführt. Diese Anordnung gestattet eine verbesserte Oberflächenanalyse.

Die bekannten AFM-Verfahren haben - prinzipbedingt - den Nachteil, keine chemische bzw. elektronische Information über die Oberfläche zu liefern. Die SNOM-Verfahren sind auf den Wellenlängenbereich der Transmission durch Glasfasern beschränkt und benötigen das AFM-Signal zur Messung, die Verwendung von molekularen Markersubstanzen kann das Untersuchungsergebnis a *priori* verfälschen. Die o.g. Methode von Farahani hat ebenfalls den Nachteil auf semi-transparente Proben angewiesen zu sein. Die nanoskopische Antenne ist passiv, nicht kontaktiert und daher nicht konfigurierbar. Die Antenne kann sich nicht verschiedenen Probengegebenheiten anpassen.

Aufgabe der vorliegenden Erfindung ist es deshalb, diese Schlüsselprobleme der bisher verwendeten Vorrichtungen und Verfahren zu überwinden.

Erfindungsgemäß wird die Aufgabe durch eine Vorrichtung nach Anspruche 1 bzw. ein Verfahren nach Anspruch 10 gelöst.

Die Erfindung ermöglicht eine Kombination aus Raster-Kraft-Mikroskopie (AFM-atomic force microscopy), der Anregung von plasmonischen Oberflächen-Polaritonen (SPPs-surface plasmon polaritons), resonanter, oberflächenverstärkter Raman-Streuung (SERS- surface enhanced Raman scattering) und Photoemission und -absorption (XPS-x-ray photoemission, XAS-x-ray absorption spectroscopy) durch Licht, insbesondere durch Synchrotronstrahlung. Die Kombination dieser Methoden wird durch die Funktionalisierung der Raster-Kraft-Messspitze und die spezielle geometrische Anordnung erreicht.

Durch die erfindungsgemäße Vorrichtung bzw. das Verfahren gelingt es, komplementäre Informationen und Modifikationsmöglichkeiten zur Verfügung zu stellen. Die Kombination des AFM-Verfahrens mit resonanter, oberflächenverstärkter Raman-Streuung (SERS) und Photoemission und Absorption (XPS-x-ray photoemission XAS-x-ray absorption spectroscopy) gelingt durch die Funktionalisierung der Messspitze. Diese Funktionalisierung sieht eine aktive Konfigurierbarkeit der Kontakte vor.

Die Erfindung beruht auf der Erkenntnis, dass durch Kombination des AFM mit Raman- und aktiven Plasmon-Resonator(en), die *lokal* und *in situ* komplementäre Informationen liefern, die im Stand der Technik bestehenden Probleme gelöst werden können. Zusätzlich eröffnet die Erfindung die Möglichkeit, *gleichzeitig* photoelektronenspektroskopische Verfahren zu verwenden. Die geometrische Anordnung des Cantilevers senkrecht zu der zu untersuchenden Oberfläche, die Funktionalisierung der Messspitze mittels eines Loches und konfigurierbaren Elektroden sowie die Verwendung von Synchrotronstrahlung, die durch das Loch tritt, kennzeichnen die Erfindung.

Analytische Ergebnisse, die mit der erfindungsgemäßen Vorrichtung *gleichzeitig* erzielt werden, können durch geeignete Auswertung getrennt werden. Dabei sind folgende Aspekte von Bedeutung:
- die AFM-Methode arbeitet unabhängig von der Plasmonresonanz und der resonanten Raman-Streuung;
- die AFM-Methode arbeitet unabhängig von der Photoelektronenspektroskopie;
- Synchrotronstrahlung oder Laserlicht kann durch ein oder mehrere Löcher in oder neben der Messspitze auf wenige nm² kollimiert werden;
- die Synchrotronstrahlung kann in ihren Eigenschaften Intensität, Wellenlänge, Polarisation (unpolarisiert, linear, elliptisch und zirkular), Pulsung und Kohärenz unabhängig und in weiten Bereichen eingestellt werden;
- die Konfiguration der Kontakte der Messspitze kann während der Messung durch Änderung der angelegten Spannung und deren Frequenz aktiv den Messaufgaben angepasst werden.

Diese Kombination erlaubt es weiterhin, die Erfindung zur Modifikation von Oberflächen und oberflächennahen (einige Atomlagen) Bereichen von Proben einzusetzen. Hierbei kann erfindungsgemäß die Modifikation durch Synchrotronstrahlung oder durch mechanische Einwirkung der Messspitze oder durch Wechselwirkung einer plasmonischen Resonanz zwischen den Elektroden der Spitze und der Probe erfolgen.

Durch diese Kombination mehrere Messprinzipien gestattet die erfindungsgemäße Vorrichtung eine drastische Vereinfachung von Materialanalyse und Modifikation, die sonst stets (räumlich) getrennte Verfahren und Anordnungen benötigt. Bereits das Wiederauffinden von nanoskopischen Strukturen nach einem solchen Methodenwechsel kann in vielen Fällen unmöglich sein, beispielsweise durch Kontamination der Oberflächen beim Transport, der nicht unter Vakuumbedingungen stattfindet.

Bevorzugte Ausführungsformen der Erfindung sind in den Unteransprüchen genannt.

Einzelheiten, Weiterbildungen und Vorteile der Erfindung ergeben sich aus der nachfolgenden Beschreibung bevorzugter Ausführungsformen, unter Bezugnahme auf die Zeichnung. Es zeigen:
- Fig. 1: - eine perspektivische Ansicht des prinzipiellen Aufbaus einer erfindungsgemäßen Vorrichtung mit einer Messspitze an einem Cantilever;
- Fig. 2: - eine perspektivische und eine seitliche Ansicht des prinzipiellen Aufbaus der Vorrichtung mit einem Blendenträger zur Einkopplung von Synchrotronstrahlung;
- Fig. 3: - ein Blockschaltbild einer Schaltung zur Kontrolle des AFM bei Amplituden- und Phasendetektion;
- Fig. 4: - ein Blockschaltbild einer Schaltung zur Kontrolle des konfigurierbaren, aktiven plasmonischen Resonators auf der Messspitze;
- Fig. 5: - eine perspektivische Ansicht einer abgewandelten Ausführungsform der Messspitze der Vorrichtung;
- Fig. 6: - eine perspektivische Ansicht einer nochmals abgewandelten Ausführungsform der Vorrichtung mit einem Loch außerhalb der Messspitze.

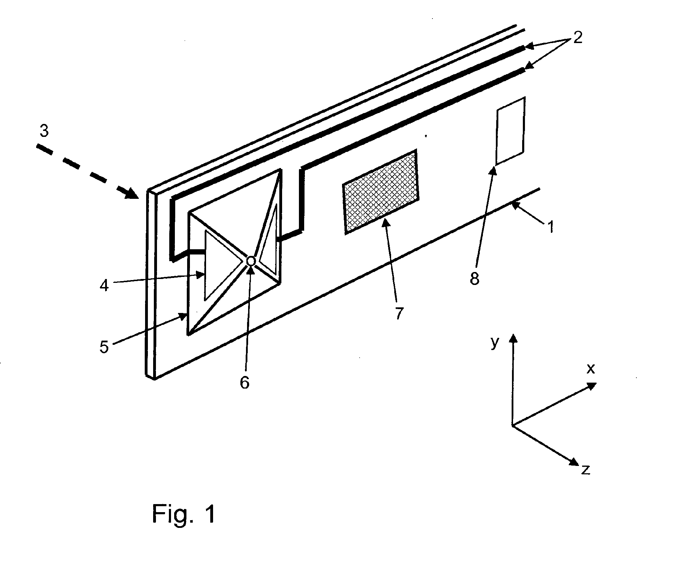

In Fig. 1 ist der Aufbau einer erfindungsgemäßen Messspitze 5 dargestellt, welche an einem Cantilever 1 angeordnet ist. Die Messspitze 5 weist ein oder mehrere Löcher 6 auf, durch welche Licht 3 - insbesondere Synchrotronstrahlung oder Laserlicht - auf die Oberfläche der zu untersuchenden Probe gebracht wird. Auf der Messspitze 5 sind außerdem mindestens zwei Elektroden 4 angebracht, die einen plasmonischen Resonator darstellen und über elektrische Anschlüsse 2 versorgt werden. Das Loch 6 für den Durchgang der Lichtstrahlung 3 verläuft vorzugsweise zentral durch die pyramidenförmige Messspitze 6, sodass das Licht an der Spitze, zwischen den Elektroden 4 austritt. Am Cantilever 1 sind in an sich bekannter Weise mindestens ein integrierter, piezoresistiver Sensor 8 und mindestens ein integrierter Bimorph-Aktuator 7 angebracht.

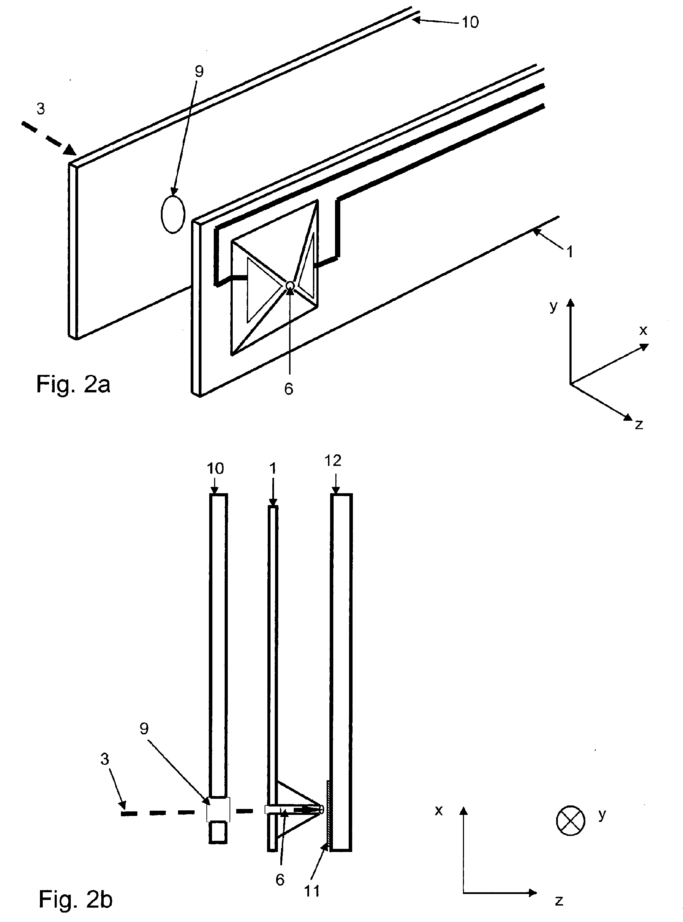

In Fig. 2a und 2b ist die prinzipielle Anordnung dargestellt, die das Einkoppeln von Synchrotronstrahlung 3 erlaubt. Die Synchrotronstrahlung trifft seitlich, horizontal auf eine in den vertikalen Richtungen (x, y) mit nanometrischer Präzision positionierbare Vorblende 9 eines Blendenträgers 10. Danach tritt die Strahlung durch das Loch 6 in der Messspitze 5 und auf die Oberfläche der Probe. Die Innenseite des Loches 6 kann metallisiert werden. Die gesamte Anordnung kann so positioniert werden, dass die Synchrotronstrahlung 3 mit einer konstanten Intensität durch das Loch 6 in der Messspitze 5 auf die Oberfläche einer Probe 11 trifft. Diese wird dann in beiden vertikalen Richtungen (x, y) auf einem Positioniertisch 12 gerastert bewegt. Die Steuerung dieses Tisches ist gekoppelt mit der Steuerung des AFM und der beschriebenen Verfahren.

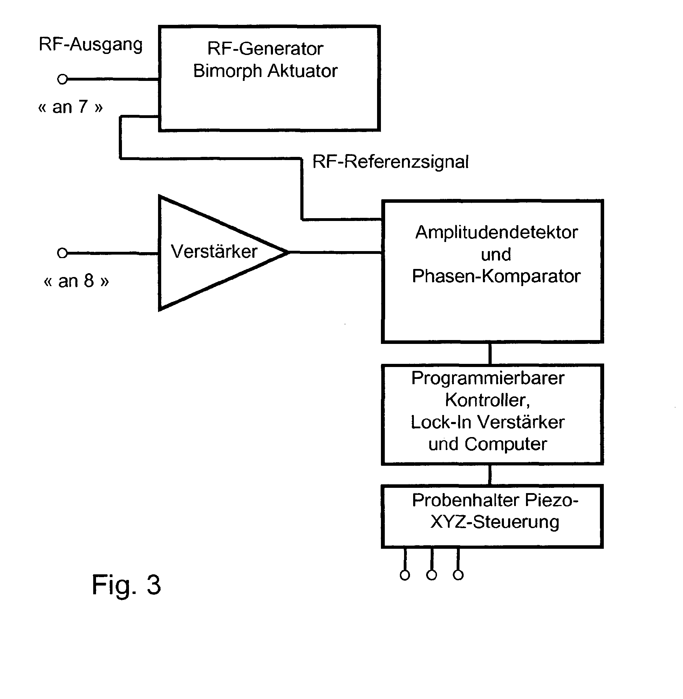

In Fig. 3 ist ein Blockschaltbild des AFM bei Amplituden- und Phasendetektion dargestellt. Die Detektion geschieht über die Messung der Amplitude mit Hilfe des Netzwerks der in den Cantilever 1 integrierten Piezoresistoren 8. Die Messung der Phase erfolgt über den Vergleich der Phase des Anregungssignals und der des Messsignals der Piezoresistoren 8.

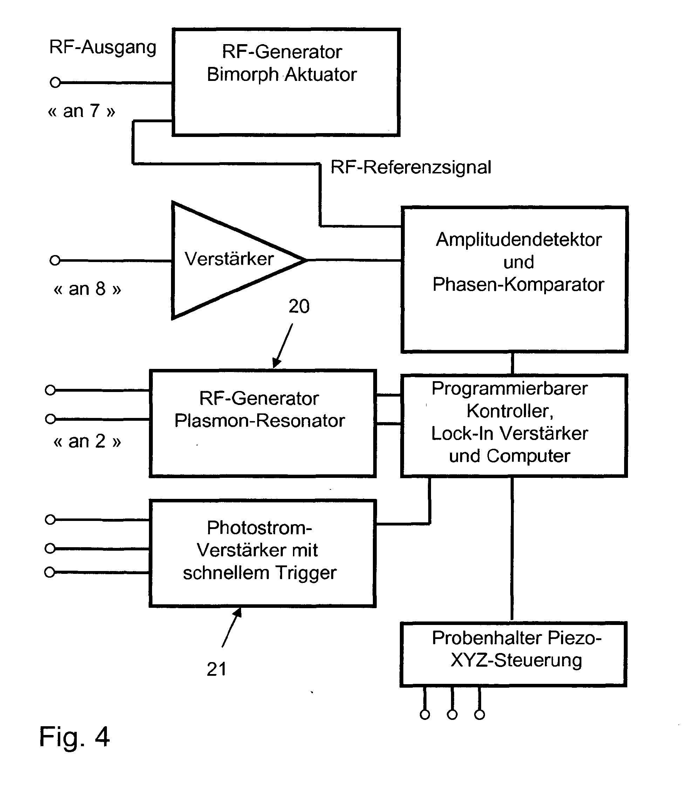

In Fig. 4 ist ein Blockschaltbild zur Kontrolle des konfigurierbaren, plasmonischen Resonators 5 dargestellt, welcher auf der Messspitze 1 angebracht ist. Ein Funktionsgenerator 20 erzeugt die Resonanzfrequenz, deren Amplitude und Phase empfindlich von der elektronischen Umgebung der Antenne, also der Probenoberfläche 11 abhängen.

Das erfindungsgemäße Verfahren erlaubt auch die passive Verwendung des Resonators, als Empfangsantenne.

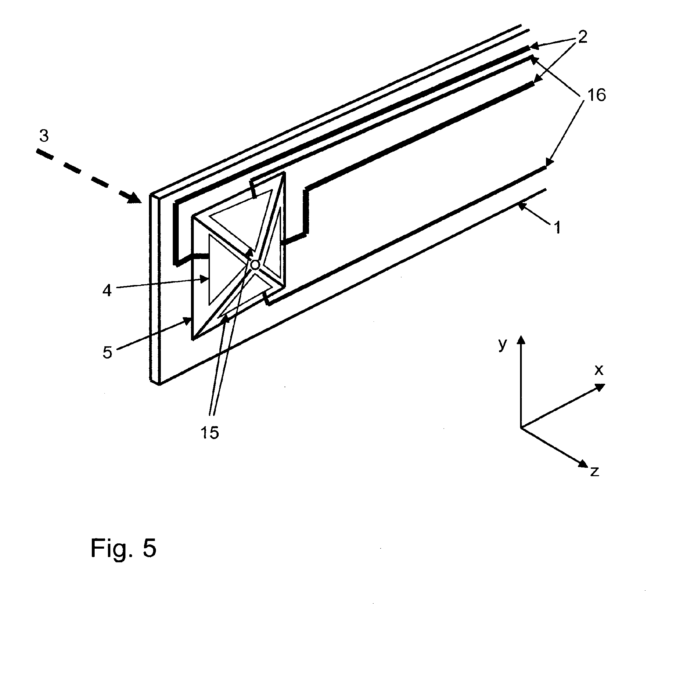

Fig. 5 zeigt eine abgewandelte Ausführungsform der Messspitze 5, die neben den beiden ersten Elektroden 4 zwei weitere Elektroden 15 trägt, welche über weitere Anschlüsse 16 elektrisch kontaktiert sind. Damit ist zusätzlich die Detektion von Photoelektronen möglich. Diese werden von den Elektroden aufgefangen. Ein oder mehrere ladungsempfindliche Vorverstärker 21 (Fig. 4) liefern ein Messsignal. Dieses Messsignal ist eine lokale Information über die Photoemission, und liefert lokale, elektronische Informationen über die Oberfläche der untersuchten Probe 11.

Eine weitere Ausgestaltungsmöglichkeit besteht darin, mehrere Löcher 6 in einer Messspitze 5 in einer oder mehreren Messspitzen anzuordnen. Eine räumliche Überlagerung der Synchrotronstrahlung hinter der Spitze wird durch mehrere Löcher 6 in einem oder mehreren Cantilevern 1 erreicht. Das Prinzip basiert auf dem anormalen Transmissionsphänomen (anomalous transmission phenomenon), welches bei metallisierten, nanoskopischen Löchern auftritt [vgl. z.B. Publikation von C. Genet und W. Ebbesen in Nature, Vol 445, 4th january 2007, Seite 39-46].

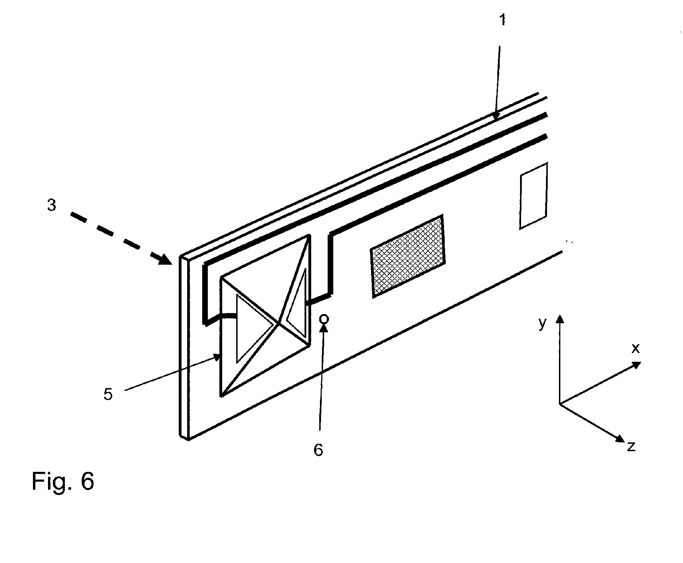

Fig. 6 zeigt eine perspektivische Ansicht einer nochmals abgewandelten Ausführungsform der Messspitze 1. Das Loch 6 ist hier nicht in sondern neben der Messspitze 5 im Cantilever positioniert.

### Bezugszeichenliste

1 - Cantilever
2 - elektrische Anschlüsse
3 - Lichtstrahl
4 - Elektroden
5 - Messspitze
6 - Loch
7 - Bimorph-Aktuator
8 - piezoresistiver Sensor
9 - Vorblende
10 - Blendenträger
11 - Probe
15 - weitere Elektroden
16 - weitere elektrische Anschlüsse

20 - Funktionsgenerator
21 - Vorverstärker

## Patentansprüche

1. Vorrichtung für ein Raster-Kraft Mikroskop (AFM) zur Untersuchung und/oder Modifikation von Materialoberflächen (11), umfassend einen Cantilever (1) mit einem integrierten piezoresistiven Sensor (8) und einem integrierten Bimorph-Aktuator (7), sowie eine Messspitze (5), wobei die Messspitze (5) und/oder der Cantilever (1) mindestens ein nanoskopisches Loch (6) aufweisen, durch welches Synchrotronstrahlung oder Laserlicht auf die zu untersuchende Materialoberfläche gerichtet werden kann, **dadurch gekennzeichnet, dass** die Messspitze (5) weiterhin mindestens zwei metallische Elektroden (4) trägt, die einen plasmonischen Resonator darstellen und über elektrische Anschlüsse (2) ansteuerbar sind.

2. Vorrichtung nach Anspruch 1, **dadurch gekennzeichnet, dass** der piezoresistive Sensor (8), der Bimorph-Aktuator (7) und die Elektroden (4) unabhängig voneinander steuerbar sind.

3. Vorrichtung nach Anspruch 2, **dadurch gekennzeichnet, dass** der piezoresistive Sensor (8), der Bimorph-Aktuator (7) und die Elektroden (4) galvanisch voneinander getrennt auf dem Cantilever (1) angeordnet sind.

4. Vorrichtung nach einem der Ansprüche 1 bis 3, **dadurch gekennzeichnet, dass** die Messspitze (5) mehrere Löcher (6) aufweist.

5. Vorrichtung nach einem der Ansprüche 1 bis 3, **dadurch gekennzeichnet, dass** der Cantilever (1) mehrere Löcher (6) aufweist.

6. Vorrichtung nach einem der Ansprüche 1 bis 5, **dadurch gekennzeichnet, dass** auf der von der Materialoberfläche (11) abgewandten Seite des Cantilever (1) ein Blendenträger (10) mit einer Vorblende (9) angeordnet ist, durch welche die Synchrotronstrahlung oder das Laserlicht (3) geführt wird.

7. Vorrichtung nach Anspruch 6, **dadurch gekennzeichnet, dass** der Blendenträger (10) in den senkrecht durch die Vorblende (9) verlaufenden Achsen verschiebbar ist, um die Vorblende (9) mit dem Loch (6) auszurichten.

8. Vorrichtung nach einem der Ansprüche 1 bis 7, **dadurch gekennzeichnet, dass** sie mehrere Cantilever (1) mit Messspitzen (5), darin befindlichen Löchern (6) sowie Elektroden (4) umfasst.

9. Vorrichtung nach einem der Ansprüche 1 bis 8, **dadurch gekennzeichnet, dass** an der Messspitze (5) mindestens vier Elektroden (4, 6) angebracht sind, die über elektrische Anschlüsse (2, 16) paarweise unabhängig voneinander steuerbar sind.

10. Verfahren zur Untersuchung und Modifikation von Materialoberflächen und oberflächennahen Eigenschaften, **dadurch gekennzeichnet, dass** folgende Schritte nacheinander oder gleichzeitig mit ein und derselben Vorrichtung nach einem der Ansprüche 1 bis 9 ausgeführt werden:
- Ausführen einer Raster-Kraft Mikroskopie (AFM);
- Ausführen einer resonanten Raman-Streuung (SERS); und
- Ausführen einer Photoemissionsspektroskopie(XPS, XAS);
- Ausführen von Materialmodifikation durch lokale Belichtung.

## Claims

1. Atomic force microscope (AFM) device for studying and/or modifying material surfaces (11), comprising a cantilever (1) having an integrated, piezo-resistive sensor (8), and an integrated bimorph-actuator (7), and a measurement tip (5), said measurement tip (5) and/or cantilever (1) having at least one nanoscopic hole (6), through which synchrotron radiation or laser light can be directed to the material surface to be examined, **characterized in that** the measurement tip (5) further having at least two metallic electrodes (4) which represent a Plasmon resonator and can be controlled by electrical connections (2).

2. Device according to claim 1, **characterized in that** the piezo-resistive sensor (8), the bimorph-actuator (7), and the electrodes (4) are independently controllable of each other.

3. Device according to claim 2, **characterized in that** the piezo-resistive sensor (8), the bimorph-actuator (7), and the electrodes (4) are disposed on the cantilever (1) being galvanically separated from one another.

4. Device according to one of claims 1 to 3, **characterized in that** the measurement tip (5) includes a plurality of holes (6).

5. Device according to one of claims 1 to 3, **characterized in that** the cantilever (1) includes a plurality of holes (6).

6. Device according to one of claims 1 to 5, **characterized in that** on those side of the cantilever (1) opposing the material surface (11) an aperture support (10) is disposed having an initial aperture (9) disposed therein through which the synchrotron radiation or the laser light (3) is guided.

7. Device according to claim 6, **characterized in that** the aperture support (10) is movable along the axes that run perpendicularly through the initial aperture (9), in order to align the initial aperture (9) with the hole (6).

8. Device according to one of claims 1 to 7, **characterized in that** it comprises multiple cantilevers (1) with measurement tips (5), having holes (6) arranged therein, as well as electrodes (4).

9. Device according to one of claims 1 to 8, **characterized in that** at least four electrodes (4, 6) are attached to the measurement tip (5), being controllable in pairs independently of each other by electrical connections (2, 16).

10. Method for studying and modifying material surfaces and near-surface properties, **characterized in that** the following steps are performed consecutively, or simultaneously with one and the same device according to one of claims 1 to 9:
- Performing an atomic force microscopy (AFM);
- Performing a resonant Raman scattering (SERS); and
- Performing a photoemission spectroscopy (XPS, XAS);
- Performing a material modification using local illumination.

## Revendications

1. Dispositif pour un microscope à force atomique (AFM) pour l'examen et/ou la modification de surfaces de matériaux (11), comprenant un cantilever (1) avec un capteur intégré piézorésistif (8) et un actionneur intégré bimorphe (7) ainsi qu'une pointe de mesure (5), dans lequel la pointe de mesure (5) et/ou le cantilever (1) présentent au moins un trou nanoscopique (6) à travers lequel un rayonnement synchrotron ou de la lumière laser peut être dirigé(e) sur la surface de matériau à examiner, **caractérisé en ce que** la pointe de mesure (5) comprend par ailleurs au moins deux électrodes métalliques (4) qui constituent un résonateur plasmonique et peuvent être amorcées via des raccordements électrique (2).

2. Dispositif selon la revendication 1, **caractérisé en ce que** le capteur piézorésistif (8), l'actionneur bimorphe (7) et les électrodes (4) peuvent être commandés indépendamment les uns des autres.

3. Dispositif selon la revendication 2, **caractérisé en ce que** le capteur piézorésistif (8), l'actionneur bimorphe (7) et les électrodes (4) sont disposés de manière séparée galvaniquement les uns des autres sur le cantilever (1).

4. Dispositif selon l'une des revendications 1 à 3, **caractérisé en ce que** la pointe de mesure (5) présente plusieurs trous (6).

5. Dispositif selon l'une des revendications 1 à 3, **caractérisé en ce que** le cantilever (1) présente plusieurs trous (6).

6. Dispositif selon l'une des revendications 1 à 5, **caractérisé en ce que**, sur le côté du cantilever (1) tournant le dos à la surface de matériau (11) est disposé un porte-chicane (10) avec une pré-chicane (9) grâce à laquelle le rayonnement synchrotron ou la lumière laser (3) est guidé(e).

7. Dispositif selon la revendication 6, **caractérisé en ce que** le porte-chicane (10) peut coulisser dans les axes s'étendant perpendiculairement à travers la pré-chicane (9) afin d'aligner la pré-chicane (9) avec le trou (6).

8. Dispositif selon l'une des revendications 1 à 7, **caractérisé en ce qu'**il comprend plusieurs cantilevers (1) avec des pointes de mesure (5), des trous (6) qui s'y trouvent ainsi que des électrodes (4).

9. Dispositif selon l'une des revendications 1 à 8, **caractérisé en ce qu'**au moins quatre électrodes (4, 6) sont mises en place sur la pointe de mesure (5), lesquelles peuvent être commandées indépendamment les unes des autres par paires via des raccordements électriques (2, 16).

10. Procédé pour l'examen et la modification des surfaces de matériaux et des propriétés proches de la surface, **caractérisé en ce que** l'on exécute les étapes suivantes, successivement ou simultanément, avec un seul et même dispositif selon l'une des revendications 1 à 9 :
- exécution d'une microscopie à force atomique (AFM) ;
- exécution d'une diffusion Raman résonante (SERS) ; et
- exécution d'une spectroscopie de photoémission (XPS, XAS) ;
- exécution d'une modification de matériau par exposition lumineuse locale.
